# EUROPÄISCHE PATENTSCHRIFT

(11) **EP 0 850 119 B1**
(45) Veröffentlichungstag und Bekanntmachung des Hinweises auf die Patenterteilung: **23.01.2002**
(21) Anmeldenummer: 97929298.4
(22) Anmeldetag: 26.06.1997
(51) Int. Cl.: B23B 51/10

(54) **ENTGRATWERKZEUG ZUM ENTGRATEN DES BOHRUNGSRANDES VON BOHRUNGEN**
DEVICE FOR DEBURRING BORE EDGES
OUTIL D'EBARBAGE POUR EBARBER LE BORD DE TROUS

(30) Priorität: 09.07.1996 US 680517
(43) Veröffentlichungstag der Anmeldung: 01.07.1998
(73) Patentinhaber: Heule, Ulf, 9436 Balgach (CH)
(72) Erfinder: Heule, Ulf, 9436 Balgach (CH)
(74) Vertreter: Riebling, Peter, Dr.-Ing.
(86) Internationale Anmeldenummer: EP9703364
(87) Internationale Veröffentlichungsnummer: WO9801251

(56) Entgegenhaltungen:
- EP-A- 0 370 210
- EP-A- 0 446 767
- WO-A-94/20249
- US-A- 3 230 798
- US-A- 5 277 528

## Beschreibung

Die Erfindung betrifft ein Entgratwerkzeug zum Entgraten des Bohrungsrandes von Bohrungen mit einem Grundkörper, in dem mindestens eine Quer zur Längsachse des Grundkörpers gerichtete Ausnehmung angeordnet ist, in welcher mindestens ein Messer in Längsrichtung der Ausnehmung federbelastet verschiebbar angeordnet ist (siehe z.B. EP-A-370 210).

Ein derartiges Entgratwerkzeug ist in mehreren verschiedenen Ausführungsformen bekannt geworden. Den bekannten Ausführungsformen ist gemeinsam, daß die Querverschiebung des in der quer angeordneten Ausnehmung im Grundkörper angeordneten Messers über eine Steuerwippe erfolgt, welche im Grundkörper verdrehbar angeordnet ist. Mit der federbelasteten Verdrehung dieser Steuerwippe wird demzufolge auch die Verschiebung eines oder mehrerer in der Ausnehmung verschiebbar gelagerter Messer gesteuert.

Die Anordnung einer um ihre Längsachse verdrehbaren Steuerwippe hat jedoch den Nachteil, daß die zum Drehantrieb der Steuerwippe notwendige Feder relativ aufwendig ausgebildet ist und die Steuerwippe eine relativ hohe Reibung gegen Verdrehung in ihrer Ausnehmung erfährt. Ein derartiges Entgratwerkzeug ist insbesondere nicht zur Miniaturisierung geeignet und ist im übrigen relativ kostenaufwendig in der Herstellung.

Der Erfindung liegt deshalb die Aufgabe zugrunde, ein Entgratwerkzeug der eingangs genannten Art so weiterzubilden, daß es wesentlich kostengünstiger herstellbar ist und daß es wesentlich verkleinerbar ist, um auch kleine Bohrungsränder entsprechend zu entgraten.

Zur Lösung der gestellten Aufgabe ist die Erfindung durch die Merkmale des Anspruchs 1 gekennzeichnet.

Wesentliches Merkmal der Erfindung ist, daß in einer Längsbohrung des Grundkörpers mindestens eine Druckfeder angeordnet ist, die sich an das eine Ende eines axial verschiebbar angeordneten Steuerbolzens anlegt, dessen anderes Ende in einer im Messer angeordneten Steuerausnehmung eingreift, welche dem Messer in Verschieberichtung mindestens eine Haltekraft zugeordnet ist.

Wichtig bei der Erfindung ist also, daß nun der Steuerbolzen nicht mehr um seine Längsachse verdrehbar ausgebildet ist, sondern daß er in axialer Richtung in der Längsausnehmung des Grundkörpers verschiebbar ausgebildet ist. Damit ergibt sich der Vorteil, daß der Antrieb für die federbelastete Verschiebung dieses Steuerbolzens wesentlich einfacher ausgebildet werden kann und dementsprechend auch weniger Platz beansprucht. Es kann nämlich eine einfache Feder (z.B. eine Schraubendruckfeder, Schenkelfeder oder Spiralfeder) verwendet werden, die den direkten axialen Verschiebeantrieb für den Steuerbolzen übernimmt.

Wichtig ist nun, daß das freie untere Ende dieses Steuerbolzens federbelastet in eine entsprechende Steuerausnehmung an der Oberseite des Messers eingreift. Die Steuerausnehmung ist so ausgebildet, daß dem Messer verschiedene Haltekräfte zugeordnet werden.

Bei dem Entgraten von Bohrungsrändern ist es nämlich wichtig, daß das Messer in seine Entgrat- oder Schneidstellung relativ starr und unverschieblich im Grundkörper gehalten wird, um die entsprechenden Schneid- und Zerspankräfte aufnehmen zu können.

Zu diesem Zweck ist es vorgesehen, daß der federbelastete Steuerbolzen in der Steuerausnehmung so verankert ist, daß die Haltekraft des Messers in der querverlaufenden Ausnehmung des Grundkörpers möglichst groß ist, um das Messer nicht in unerwünschter Weise während des Schneid- und Zerspanungsvorgangs in die Ausnehmung zurückdrücken zu lassen.

Mit zunehmenden Zerspanungsdruck auf das Messer wird auf dieses eine entsprechende, in Längsrichtung der querliegenden Ausnehmung gerichtete, Verschiebkraft ausgeübt, die dazu tendiert, das Messer in diese Ausnehmung zurückzudrücken. Während des Wirkens dieser Kraft ist erfindungsgemäss vorgesehen, daß der federbelastete Kopf des Druckstifts an einer relativ stark geneigten Geraden im Bereich der Steuerausnehmung entlanggleitet, bis zu einer Kante, wo diese Gerade in eine flacher geneigte Gerade übergeht.

Solange also der federbelastete Kopf des Druckstifts an dieser steiler ausgerichteten Geraden anliegt und an dieser entlanggleitet, bleibt der Zerspanungsdruck auf das Messer relativ konstant, so daß es in der Lage ist, eine Fase von beispielsweise 3 mm Breite am Bohrungsrand einer Bohrung anzubringen. Erst wenn das Entgratwerkzeug mit zunehmendem Druck auf den Bohrungsrand aufgesetzt wird, "schnappt" der federbelastete Kopf des Druckstiftes über die Kante der steil ausgerichteten Geraden und kommt in den Bereich einer zweiten Geraden, die weniger steil als die erste Gerade ausgebildet ist.

Dies führt dazu, daß das Messer nun keinen großen Widerstand mehr gegen eine Verschiebung in die Ausnehmung des Entgratwerkzeuges hinein entgegensetzt, und entsprechend dem zunehmenden Druck auf das Entgratwerkzeug in die Ausnehmung des Entgratwerkzeuges hinein verschoben wird.

Das heisst, daß die Schneidkanten, die konisch an dem Messer angeordnet sind, nun erfindungsgemäss in einen vorderen, nicht schneidenden Bereich übergehen, und daß sich nun dieser nicht-schneidende Bereich des Schneidmessers an der Bohrungsinnenwand der zu entgratenden Bohrung anlegt. Das Messer ist also in dieser Verschiebestellung soweit in die Querausnehmung hineinverschoben, daß die Schneidkanten nicht mehr in Eingriff mit dem Bohrungsrand sind. Das Schneidmesser wird also in axialer Richtung durch die Bohrung hindurchgeführt und kann auf der anderen Seite der Bohrung (sofern es sich um eine Durchgangsbohrung handelt) aus dieser Bohrung heraustreten und mit dem Heraustreten dieses Entgratwerkzeuges aus der Durchgangsbohrung schnappt das Messer wieder aus der querverlaufenden Ausnehmung im Grundkörper heraus und die Schneidkanten stehen wieder für die Entgratung des Bohrungrandes an der Rückseite der Durchgangsbohrung zur Verfügung.

Das Entgratwerkzeug wird nun im Rückwärtshub betrieben, d.h. in analoger Weise wie vorhin in Verbindung mit dem Vorwärtshub beschrieben wurde, kann nun die andere Schneidkante des Messers zur Entgratung des rückwärtigen Bohrungsrandes der Durchgangsbohrung verwendet werden.

Im übrigen gelten die gleichen Verhältnisse, d.h. mit zunehmendem Zerspanungsdruck auf das Messer weicht dieses entgegen der Kraft des federbelasteten Druckstifts in die Ausnehmung zurück, bis der federbelastete Druckstift wieder auf die Gerade mit geringerer Steigung aufläuft und die vorher starke Haltekraft des Messers in eine schwächere Haltekraft übergeht, die dazu führt, daß das Messer in die querverlaufende Ausnehmung hineinverschoben wird und die Schneidkante außer Eingriff mit dem zu entgratenden Bohrungsrand gebracht wird.

Im übrigen wird darauf hingewiesen, daß die vorliegende Erfindung nicht auf die Verwendung eines einzigen Druckstifts beschränkt ist. Es können auch zwei Druckstifte vorgesehen werden, die parallel zueinander angeordnet sind, wobei jedem Druckstück jeweils ein Messer in der Art zugeordnet ist, wie es nachstehend beschrieben wird.

Ebenso ist in einer anderen Ausgestaltung der Erfindung vorgesehen, daß mehr als ein Messer in einer Ausnehmung angeordnet sind, wobei das eine Messer dann zu der einen Seite der Ausnehmung gerichtet ist, während das andere Messer in die entgegengesetzte Seite der Ausnehmung hineingerichtet ist.

In einer dritten Ausgestaltung der Erfindung ist es vorgesehen, daß mehrere derartige Messer übereinanderliegend in einem Entgratwerkzeug angeordnet sind und daß jedem Messer der beschriebene Antrieb zugeordnet ist.

Im folgenden wird die Erfindung anhand von mehrere Ausführungswege darstellenden Zeichnungen näher erläutert. Hierbei gehen aus den Zeichnungen und ihrer Beschreibung weitere Merkmale und Vorteile vorteilhafter Ausgestaltungen der Erfindung hervor.

Es zeigen:
- Figur 1:: schematisiert gezeichneter Schnitt durch ein Entgratwerkzeug nach der Erfindung,
- Figur 2:: vergrößerter Schnitt durch den unteren Teil des Entgratwerkzeugs nach Figur 1,
- Figur 3:: Stirnansicht des Entgratwerkzeugs nach Figur 1,
- Figur 4:: eine gegenüber Figur 2 weiter vergrößerte Schnittansicht des Entgratwerkzeugs,
- Figur 5:: schematisiert eine zweite Ausgestaltung des Federantriebs des Druckstifts,
- Figur 6:: schematisiert eine dritte Ausführungsform des Federantriebs des Druckstifts.

In einem etwa zylindrisch ausgebildeten Grundkörper 1, der bevorzugt aus einem Metallmaterial oder einem Kunststoffmaterial besteht, ist in einer Längsbohrung 2 eine Gewindeschraube 3 aufgenommen, die durch einen Schaft 4 nach unten verlängert ist. Die Gewindeschraube 3 und der Schaft 4 können als getrennte Teile ausgebildet sein, sie können aber auch werkstoffeinstückig zusammenhängen.

Am unteren Ende des Schafts 4 legt sich das eine Ende einer zylindrischen Druckfeder 5 an, deren anderes Ende sich an der Oberseite einer Federplatte 6 anlegt. Die Federplatte 6 besteht aus einer etwa scheibenförmigen Platte, an der ein unterer, mittiger Ansatz angeordnet ist, der eine Sackbohrung aufweist, in welche das eine Ende eines Steuerbolzens 7 eingreift.

Der Steuerbolzen 7 ist in Richtung der Längsachse des Grundkörpers (und damit in Richtung seiner Mittellinie 26) axial verschiebbar in einer Bohrung 29 des Grundkörpers 1 federbelastet gehalten.

Das untere Ende des Steuerbolzens 7 ist als Kopf 11 ausgebildet, der in eine zugeordnete Steuerausnehmung 10 in der oberen Kante eines Messers 8 federbelastet eingreift. Das Messer 8 ist hierbei in einer quer zur Mittellinie 26 angeordneten Ausnehmung 9 im Grundkörper 1 verschiebbar gelagert.

Die untere Stirnseite des Entgratwerkzeugs wird durch Teile des Grundkörpers 1 gebildet, wobei in dieser Stirnseite eine mittige Bohrung 12 angeordnet ist.

Das Messer 8 ist in den Pfeilrichtungen 20,20' in der Ausnehmung 9 unter der Federlast des Steuerbolzens 7 verschiebbar angeordnet.

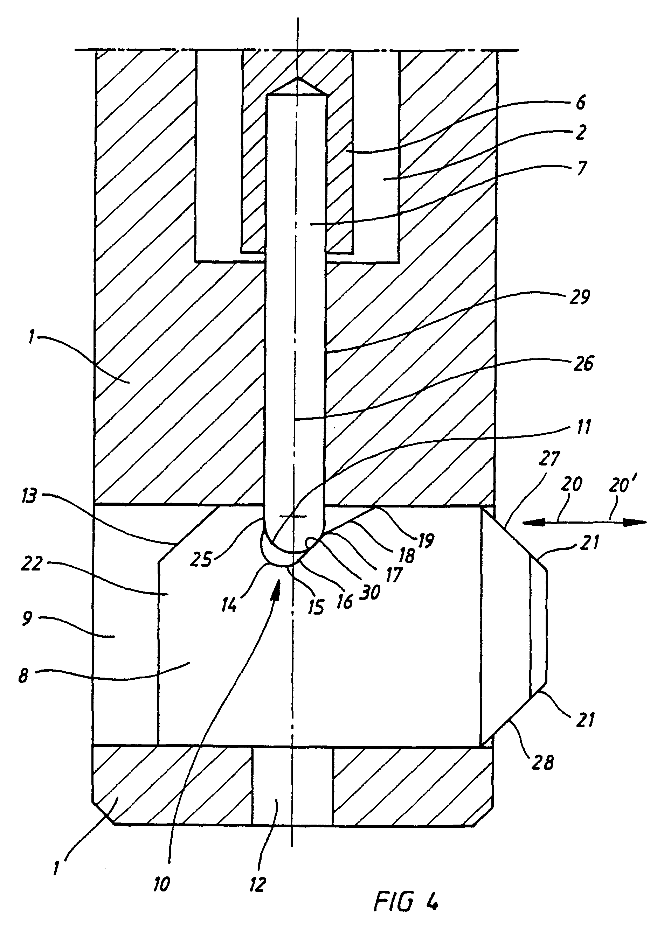

Die Figur 4 zeigt hierbei die Entgratstellung des Messers 8, wo erkennbar ist, daß es soweit wie möglich aus der Ausnehmung 9 herausgefahren ist. Wird das Entgratwerkzeug im Vorwärtshub betrieben, dann legt sich die untere Schneidkante 28 an den Bohrungsrand einer nicht näher dargestellten Bohrung an, in welche der Grundkörper 1 mit seinem unteren Ende hineinfährt.

Wichtig ist nun die Ausbildung der Steuerausnehmung 10 in Verbindung mit der Form des Kopfes 11 des Steuerbolzens 7.

Von einem unteren Radius 14, der seitlich versetzt zur Mittellinie 26 angeordnet ist, erstreckt sich auf der linken Seite der Figur 4 eine etwa vertikal ausgerichtete Anschlagkante 25 nach oben, welche in die obere, horizontal verlaufende Kante des Messers 8 einläuft.

Mit dieser Anschlagkante 25 wird ein Anschlag an der Seite des Steuerbolzens 7 geschaffen, so daß das Messer 8 nicht in Pfeilrichtung 20' aus der Ausnehmung 9 herausfallen kann.

Gleichzeitig liegt die andere Seite des Kopfes 11 des Steuerbolzens 7 an einer Geraden 16 an, die sich an den Radius 14 bei Pos. 15 anschließt und die etwa bis Pos. 17 sich erstreckt. Diese Gerade 16 hat eine relativ steile Neigung in Bezug zur Mittellinie 26. Dies führt dazu, daß während des Schneidvorgangs des Messers (während die Schneidkante 28 in Eingriff mit dem Bohrungsrand der zu entgratenden Bohrung ist) dem Messer 8 eine große Haltekraft als Sicherung gegen Verschiebung in Pfeilrichtung in die Ausnehmung verlieren wird.

Mit zunehmendem Druck auf das Entgratwerkzeug in Richtung der Mittellinie 26 wird jedoch die Verschiebungstendenz auf das Messer 8 in Pfeilrichtung 20 immer stärker, wobei gleichzeitig der Teil 30 des Kopfes 11 entlang der Geraden 16 nach oben bis etwa zur Pos. 17 verschoben wird.

Sobald der Teil 30 diese Position 17 erreicht hat, läuft die steile Gerade 16 in eine flacher geneigte Gerade 18 über, die sich von der Pos. 17 bis zur Pos. 19 erstreckt. Sobald also der Teil 30 in den Bereich dieser Geraden 18 gelangt, wird die vorherige große Haltekraft als Sicherung gegen Verschiebung in Pfeilrichtung 20 gegen eine schwächere Haltekraft ersetzt und das Messer gleitet nun in Pfeilrichtung 20 in die Ausnehmung 9 hinein.

Jetzt wird die Schneidkante 28 außer Eingriff mit dem Bohrungsrand gebracht, weil nur noch die nicht-schneidende Steuerkante 21 aus der Ausnehmung 9 herausschaut und für eine weitere Verschiebung des Messers 20 in die Ausnehmung 9 sorgt, ohne daß die Bohrung selbst noch schneidend bearbeitet wird. Die Steuerkanten 21 sind also nicht-schneidend ausgebildet.

Das Messer wird nun mit relativ geringer Gegenkraft in die Ausnehmung 9 hineinverschoben, wobei gleichzeitig das Entgratwerkzeug durch die Bohrung hindurchgeführt wird, solange, bis auf der Rückseite der Bohrung das Messer wieder aus der Ausnehmung 9 in Pfeilrichtung 20' herausschnappt.

Es kann nun die Rückseite der Bohrung entgratet werden.

In analoger Weise fängt der gleiche Vorgang an, wie er vorstehend beschrieben wurde, d.h. der Teil 30 des Kopfes 11 befindet sich wieder auf der Geraden 16, und diesmal ist die Schneidkante 27 in Eingriff mit dem rückwärtigen Bohrungsrand der Durchgangsbohrung.

Es ist selbstverständlich nicht erforderlich, daß die Schneidkanten 27,28 gleich ausgebildet sind. Sie können im Winkel voneinander abweichen oder auch unterschiedliche Formgebung aufweisen. Ebenso ist es nicht wesentlich, daß die Schräge der Schneidkanten 27,28 mit gleichem Winkel in die Schräge der nicht-schneidenden Steuerkanten 21,22 einläuft. Es können auch andere, zueinander im Winkel stehende Schrägen verwendet werden.

Für eine günstige Montage des Messers 8 in der Ausnehmung 9 ist es vorgesehen, daß es mit seiner hinteren Kante 22 in Pfeilrichtung 20 in die Ausnehmung 9 eingesteckt wird, wodurch der federbelastete Steuerbolzen 7 in Eingriff mit der Einführschräge 13 gelangt. Durch diese Einführschräge wird der Steuerbolzen 7 in Richtung nach oben angehoben und schnappt dann bei weiterem Einschiebene des Messers 8 in die Ausnehmung in Pfeilrichtung 20 in die Steuerausnehmung 10 ein und legt sich an der Anschlagkkante 25 an.

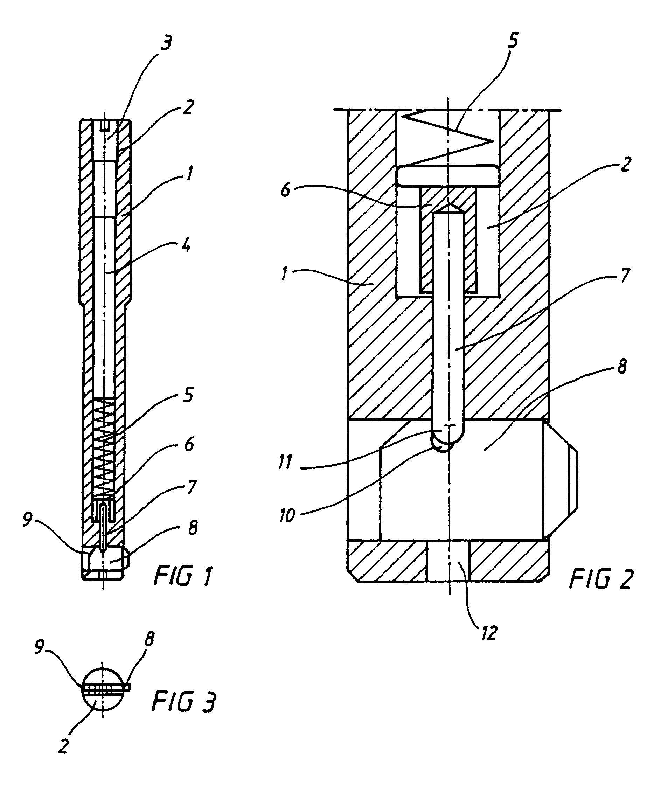

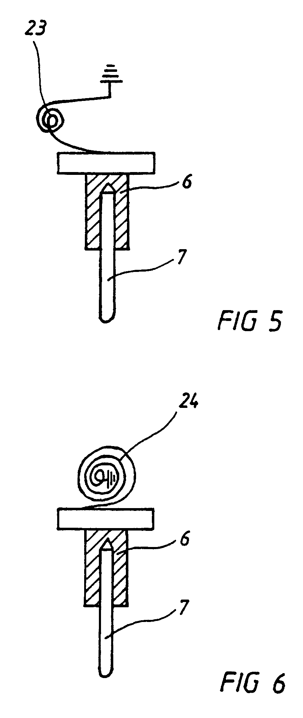

Die Figuren 5 und 6 zeigen, daß statt einer zylindrischen Druckfeder 5, wie sie in den Figuren 1 und 2 gezeigt ist, auch andere Federarten verwendet werden können. Die Figur 5 zeigt die Verwendung einer Schenkelfeder 23, während die Figur 6 die Verwendung einer Spiralfeder 24 zeigt.

### Zeichnungs-Legende

- 1: Grundkörper
- 2: Längsbohrung
- 3: Gewindeschraube
- 4: Schaft
- 5: Druckfeder
- 6: Federkraft
- 7: Steuerbolzen
- 8: Messer
- 9: Ausnehmung
- 10: Steuerausnehmung
- 11: Kopf (Steuerbolzen 7)
- 12: Bohrung
- 13: Einführschräge
- 14: Radius
- 15: Position
- 16: Gerade
- 17: Position
- 18: Gerade
- 19: Position
- 20: Pfeilrichtung 20'
- 21: Steuerkante
- 22: Kante
- 23: Schenkelfeder
- 24: Spiralfeder
- 25: Anschlagkante

- 26: Mittellinie
- 27: Schneidkante
- 28: " "
- 29: Bohrung
- 30: Teil (Kopf 11)

## Patentansprüche

1. Entgratwerkzeug zum Entgraten des Bohrungsrandes von Bohrungen mit einem Grundkörper (1), in dem mindestens eine quer zur Längsachse des Grundkörpers gerichtete Ausnehmung (9) angeordnet ist, in welcher mindestens ein Messer (8) in Längsrichtung der Ausnehmung (9) federbelastet verschiebbar angeordnet ist, **dadurch gekennzeichnet, daß** in einer Längsbohrung des Grundkörpers (1) eine Druckfeder (5) angeordnet ist, die sich an das eine Ende eines Steuerbolzens (7) anlegt, dessen anderes Ende in einer im Messer (8) angeordneten Steuerausnehmung (10) eingreift, welche dem Messer (8) in Verschieberichtung (20,20') mindestens eine Haltekraft zuordnet.

2. Entgratwerkzeug nach Anspruch 1, **dadurch gekennzeichnet, daß** das eine Ende des Steuerbolzens (7) in einer Bohrung einer Federplatte (6) aufgenommen ist und daß sich an die Federplatte (6) die Druckfeder (5) anlegt.

3. Entgratwerkzeug nach Anspruch 1 oder 2, **dadurch gekennzeichnet, daß** die Druckfeder (5) eine Schraubendruckfeder ist, (Fig. 1).

4. Entgratwerkzeug nach Anspruch 1 oder 2, **dadurch gekennzeichnet, daß** die Druckfeder (5) eine Schenkelfeder ist (Fig. 5).

5. Entgratwerkzeug nach Anspruch 1 oder 2, **dadurch gekennzeichnet, daß** die Druckfeder (5) eine Spiralfeder ist, (Fig. 6).

6. Entgratwerkzeug nach Anspruch 1, **dadurch gekennzeichnet, daß** die Steuerausnehmung (10) im Messer (8) aus einem Radius (14) besteht, von dem aus sich eine erste Gerade (16) schräg zur Mittellinie (26) des Steuerbolzens (7) erstreckt, an welche sich eine zweite Gerade (18) anschließt, welche eine flachere Steigung als die erste Gerade (16) aufweist.

7. Entgratwerkzeug nach Anspruch 6, **dadurch gekennzeichnet, daß** der Radius (14) seitlich zur Mittellinie (26) des Steuerbolzens (7) versetzt in der Steuerausnehmung (10) angeordnet ist.

8. Entgratwerkzeug nach einem der Ansprüche 6 oder 7, **dadurch gekennzeichnet, daß** an der Rückseite des Messers (8) eine Einführschräge (13) angeordnet ist.

9. Entgratwerkzeug nach Anspruch 8, **dadurch gekennzeichnet, daß** die Einführschräge (13) in der gleichen Richtung geneigt ist, wie die Geraden (16,18) der Steuerausnehmung (10).

10. Entgratwerkzeug nach einem der Ansprüche 6 - 8, **dadurch gekennzeichnet, daß** sich an den Radius (14) eine etwa vertikale Anschlagkante (25) anschließt, die sich an der Seite des Steuerbolzens (7) als Verschiebungsanschlag anlegt.

## Claims

1. Deburring tool for deburring the edges of drilled holes with a main body (1) in which is arranged at least one recess (9) which is oriented transversely to the longitudinal axis of the main body and in which at least one blade (8) is arranged so as to be displaceable under spring load in the longitudinal direction of the recess (9), **characterised in that** in a longitudinal drilled hole of the main body (1) is arranged a compression spring (5) which is applied to one end of a control bolt (7) of which the other end engages in a control recess (10) which is arranged in the blade (8) and which assigns at least one retaining force to the blade (8) in the direction of displacement (20, 20').

2. Deburring tool according to claim 1, **characterised in that** the first end of the control bolt (7) is held in a drilled hole of a spring plate (6) and **in that** the compression spring (5) is applied to the spring plate (6).

3. Deburring tool according to claim 1 or 2, **characterised in that** the compression spring (5) is a helical compression spring (Fig. 1).

4. Deburring tool according to claim 1 or 2, **characterised in that** the compression spring (5) is a leg spring (Fig. 5).

5. Deburring tool according to claim 1 or 2, **characterised in that** the compression spring (5) is a spiral spring (Fig. 6).

6. Deburring tool according to claim 1, **characterised in that** the control recess (10) in the blade (8) consists of a radius (14) from which a first straight line (16) extends obliquely to the centre line (26) of the control bolt (7) which is adjoined by a second straight line (18) which exhibits a flatter gradient than the first straight line (16).

7. Deburring tool according to claim 6, **characterised in that** the radius (14) is arranged in the control recess (10) laterally offset from the centre line (26) of the control bolt (7).

8. Deburring tool according to claim 6 or 7, **characterised in that** on the rear side of the blade (8) is arranged an insertion slope (13).

9. Deburring tool according to claim 8, **characterised in that** the insertion slope (13) is inclined in the same direction as the straight lines (16, 18) of the control recess (10).

10. Deburring tool according to one of claims 6 - 8, **characterised in that** the radius (14) is adjoined by an approximately vertical stop edge (25) which is applied to the side of the control bolt (7) as a displacement stop.

## Revendications

1. Outil d'ébarbage pour ébarber le bord de perçages, comportant un corps de base (1) avec au moins un creux (9) qui est perpendiculaire à l'axe longitudinal dudit corps de base et dans lequel au moins une lame (8) est disposée pour être mobile, contrainte par ressort, dans le sens longitudinal du creux (9), **caractérisé en ce qu'**il est prévu, dans un perçage longitudinal du corps de base (1), un ressort de compression (5) qui s'appuie contre une extrémité d'une tige de guidage (7) dont l'autre extrémité pénètre dans un creux de guidage (10) disposé dans la lame (8), lequel creux de guidage (10) applique à la lame (8) au moins une force d'arrêt dans le sens de déplacement (20, 20').

2. Outil d'ébarbage selon la revendication 1, **caractérisé en ce qu'**une extrémité de la tige de guidage (7) est logée dans un perçage d'un ressort à lames (6), et **en ce que** le ressort de compression (5) s'applique contre le ressort à lames (6).

3. Outil d'ébarbage selon la revendication 1 ou 2, **caractérisé en ce que** le ressort de compression (5) est un ressort à boudin (fig. 1).

4. Outil d'ébarbage selon la revendication 1 ou 2, **caractérisé en ce que** le ressort de compression (5) est un ressort à branches (fig. 5).

5. Outil d'ébarbage selon la revendication 1 ou 2, **caractérisé en ce que** le ressort de compression (5) est un ressort spiral (fig. 6).

6. Outil d'ébarbage selon la revendication 1, **caractérisé en ce que** le creux de guidage (10) prévu dans la lame (8) se compose d'un rayon (14) à partir duquel s'étend, en biais par rapport à l'axe (26) de la tige de guidage (7), une première droite (16) qui se prolonge par une seconde droite (18) présentant une inclinaison plus faible que la première droite (16).

7. Outil d'ébarbage selon la revendication 6, **caractérisé en ce que** le rayon (14) est disposé dans le creux de guidage (10) en étant décalé latéralement par rapport à l'axe (26) de la tige de guidage (7).

8. Outil d'ébarbage selon la revendication 6 ou 7, **caractérisé en ce qu'**un biseau d'introduction (13) est disposé sur l'arrière de la lame (8).

9. Outil d'ébarbage selon la revendication 8, **caractérisé en ce que** le biseau d'introduction (13) est incliné dans le même sens que les droites (16, 18) du creux de guidage (10).

10. Outil d'ébarbage selon l'une des revendications 6 à 8, **caractérisé en ce qu'**il est prévu, dans le prolongement du rayon (14), un bord de butée (25) à peu près vertical qui s'applique contre le côté de la tige de guidage (7), comme butée de déplacement.
